# EUROPEAN PATENT APPLICATION

(11) **EP 1 638 329 A2**
(43) Date of publication of application: **22.03.2006**
(21) Application number: 05255394.8
(22) Date of filing: 02.09.2005
(51) Int. Cl.: H04N 7/01

(54) **Deinterlacing method and video appliance adopting the deinterlacing method**

(30) Priority: 03.09.2004 KR 2004070186
(71) Applicant: Samsung Electronics Co., Ltd., Suwon-si, Gyeonggi-Do (KR)
(72) Inventor: Lee, Deuk-hoon, Suwon-si Gyeonggi-do (KR)
(74) Representative: Robinson, Ian Michael

(57) **Abstract**

Disclosed are a deinterlacing method and a video appliance adopting the deinterlacing method. The deinterlacing method includes (a) reading out address information recorded in a recording medium, (b) reading out image data from the recording medium using the readout address information, (c) generating an interlaced image by decoding the image data, (d) discriminating a kind of the image data using the address information, and (e) generating a progressive image by deinterlacing the interlaced image in different ways based on the discriminated kind of the image data. Accordingly, the deinterlacing can effectively be performed even without a high-capacity memory and a high-speed processor.

## Description

The present invention relates to a deinterlacing method and a video appliance adopting the deinterlacing method and, more particularly, to a deinterlacing method and a video appliance adopting the deinterlacing method that is capable of converting an interlaced image into a progressive image.

Deinterlacing is a technology that converts an interlaced image into a progressive image. A representative example of such deinterlacing may be the reproduction of a television (TV) broadcast or an image recorded in a DVD using a computer monitor.

Proper methods for deinterlacing an image are variable according to the kind of the image. Specifically, the proper method for deinterlacing a moving image is an inter-field interpolation, while the proper method for deinterlacing a still image is an intra-field interpolation. Accordingly, in performing the deinterlacing, a process of discriminating the type of image precedes the deinterlacing process.

Conventionally, a motion detection method has been mainly used as the method for discriminating the type of image. The motion detection method is a method for extracting motion vectors by comparing/analyzing pixels that constitute the present image with pixels that constitute the previous image, and discriminating the type of the image through the extracted motion vectors. In the motion detection method, the process of comparing the pixels constituting the present image with the pixels constituting the previous image requires a large amount of storage space and computation. Accordingly, in order to perform the motion detection method, a memory device having large storage capacity and a processor having a high computation speed are provided.

However, the high-capacity memory and the high-speed processor are expensive, and thus, the manufacturing cost of a video appliance that employ these devices is also increased.

According to the present invention there is provided an apparatus and method as set forth in the appended claims. Preferred features of the invention will be apparent from the dependent claims, and the description which follows.

The present invention has been developed in order to address the above drawbacks and other problems associated with the conventional arrangement. An aspect of the present invention is to provide a deinterlacing method and a video appliance adopting the deinterlacing method that is capable of discriminating the type of image without the necessity of a high capacity memory and a high-speed processor, and performing deinterlacing based on a result of the discrimination.

In one aspect of the present invention there is provided a video appliance, which includes a readout unit for reading out address information recorded in a recording medium and reading out image data from the recording medium using the readout address information, a decoding unit for generating an interlaced image by decoding the image data read out from the readout unit, a discrimination unit for discriminating a type of the image data readout from the readout unit using the address information readout from the readout unit, and a deinterlacing unit for generating a progressive image by deinterlacing the interlaced image generated from the decoding unit in different ways based on the type of the image data discriminated by the discrimination unit.

Preferably, the discrimination unit discriminates the image data as moving image data if the address information is time-varying, and discriminates the image data as still image data if the address information is not time-varying.

The deinterlacing unit generates the progressive image by deinterlacing the interlaced image by an inter-field interpolation if the discrimination unit discriminates the image data as the moving image data, and generates the progressive image by deinterlacing the interlaced image by an intra-field interpolation if the discrimination unit discriminates the image data as the still image data.

The inter-field interpolation may be a weave type interpolation, and the intra-field interpolation may be a bob type interpolation.

The recording medium may be at least one of an optical recording medium, a memory card, a magnetic recording medium, a connection type recording medium, a DVD (Digital Video Disk), a CD (Compact Disk), a HDD (Hard Disk Drive) and/or a USB (Universal Serial Bus) memory. If the recording medium is the DVD, the readout unit reads out the address information from DSI (Data Search Information) of the DVD.

In another aspect of the present invention, there is provided a deinterlacing method including (a) reading out address information recorded in a recording medium, (b) reading out image data from the recording medium using the readout address information, (c) generating an out from the readout unit, (d) discriminating a kind of the image data readout from the recording medium using the readout address information readout, and (e) generating a progressive image by deinterlacing the generated interlaced image in different ways based on the discriminated kind of the image data.

The deinterlacing method discriminates the image data as moving image data if the address information is time-varying, and discriminates the image data as still image data if the address information is not time-varying.

It is another aspect of the present invention to provide a deinterlacing method that generates the progressive image by deinterlacing the interlaced image by an inter-field interpolation if the image data is discriminated as the moving image data, and generates the progressive image by deinterlacing the interlaced image by an intra-field interpolation if the image data is discriminated as the still image data.

The inter-field interpolation may be a weave type interpolation, and the intra-field interpolation may be a bob type interpolation.

The recording medium may be at least one of an optical recording medium, a memory card, a magnetic recording medium, a connection type recording medium, a DVD (Digital Video Disk), a CD (Compact Disk), a HDD (Hard Disk Drive) and a USB (Universal Serial Bus) memory. If the recording medium is the DVD, the deinterlacing method includes reading out the address information from DSI (Data Search Information) of the DVD.

Another aspect of the present invention is achieved by providing a deinterlacing method including discriminating a type of an image data readout from a recording medium based on a corresponding address information of the image data, and generating a progressive image by deinterlacing a generated interlaced image in different ways based on a discriminated type of the image data.

Additional aspects and/or advantages of the invention will be set forth in part in the description which follows and, in part, will be apparent from the description, or may be learned by practice of the invention.

These and/or other aspects and advantages of the invention will become apparent and more readily appreciated from the following description of the embodiments, taken in conjunction with the accompanying drawings of which:
Figure 1 is a block diagram illustrating the construction of a video appliance that performs a deinterlacing according to the deinterlacing type determined using address information of image data according to an embodiment of the present invention;
Figure 2 is a flowchart illustrating a method for performing a deinterlacing according to a deinterlacing type determined using address information of image data according to an embodiment of the present invention; and
Figures 3A and 3B are views explaining moving image data and still image data.

Reference will now be made in detail to the embodiments of the present invention, examples of which are illustrated in the accompanying drawings, wherein like reference numerals refer to the like elements throughout. The embodiments are described below to explain the present invention by referring to the figures.

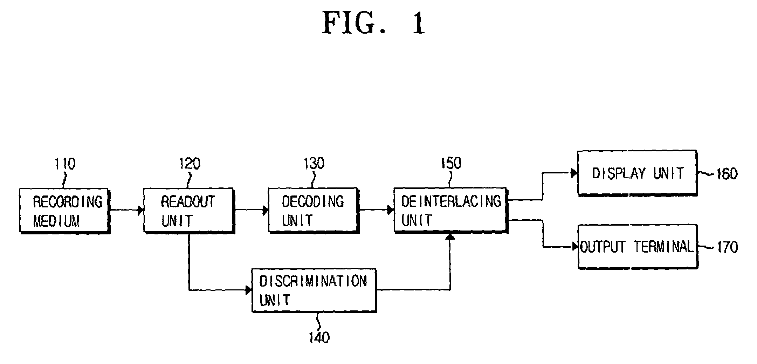

Figure 1 is a block diagram illustrating the construction of a video appliance that performs a deinterlacing according to a deinterlacing type that is determined using address information of image data according to an embodiment of the present invention. In Figure 1, the video appliance includes a recording medium 110, a readout unit 120, a decoding unit 130, a discrimination unit 140, a deinterlacing unit 150, a display unit 160, and an output terminal 170.

The recording medium 110 is a medium in which image data is recorded. The recording medium 110 is (1) mounted in the video appliance, (2) built in the video appliance, or (3) connected to the video appliance through a cable. The mount type (1) recording medium may be an optical recording medium such a DVD (Digital Video Disk) and a CD (Compact Disk), a memory card, etc. The built-in type (2) recording medium may be a magnetic recording medium such as a HDD (Hard Disk Drive). Additionally, the connection type (3) recording medium may be a USB (Universal Serial Bus) memory, and an external appliance having a built-in recording medium such as a digital camera and a digital camcorder, etc.

The image data recorded in the recording medium 110 may be divided into moving image data and still image data. In general, the moving image data is compressed in an MPEG (Moving Picture Experts Group) format to be recorded, and the still image data is compressed in a JPEG (Joint Photographic Expert Group) format to be recorded. However, the present invention is not subject to restrictions in the compression formats of the moving image data and the still image data.

In the recording medium 110, address information that indicates the recording position of the image data on the recording medium 110 is recorded in addition to the image data. This address information is used for the readout unit 120 to read out the image data from the recording medium 110 and also for the discrimination unit 140 to discriminate the type of the readout image data.

The readout unit 120 reads out the address information recorded in the recording medium 110, and reads out the corresponding image data from the recording medium 110 using the readout address information. Additionally, the readout unit 120 applies the readout address information to the discrimination unit 140, and applies the readout image data to the decoding unit 130. The decoding unit 130 generates an interlaced image by decoding the image data received from the readout unit 120, and outputs the generated interlaced image to the deinterlacing unit 150. The discrimination unit 140 discriminates the type of the image data read out from the readout unit 120. That is, the discrimination unit 140 discriminates whether the presently readout image data from the readout unit 120 is the moving image data or the still image data. The discrimination unit 140 outputs the result of the discrimination to the deinterlacing unit 150. The deinterlacing unit 150 generates a progressive image by deinterlacing the interlaced image output from the decoding unit 130. At this time, the deinterlacing unit 150 performs the deinterlacing in different ways according to the result of the discrimination (i.e., the type of the image data) from the discrimination unit 140. The progressive image generated from the deinterlacing unit 150 is outputted to the display unit 160 or the output terminal 170.

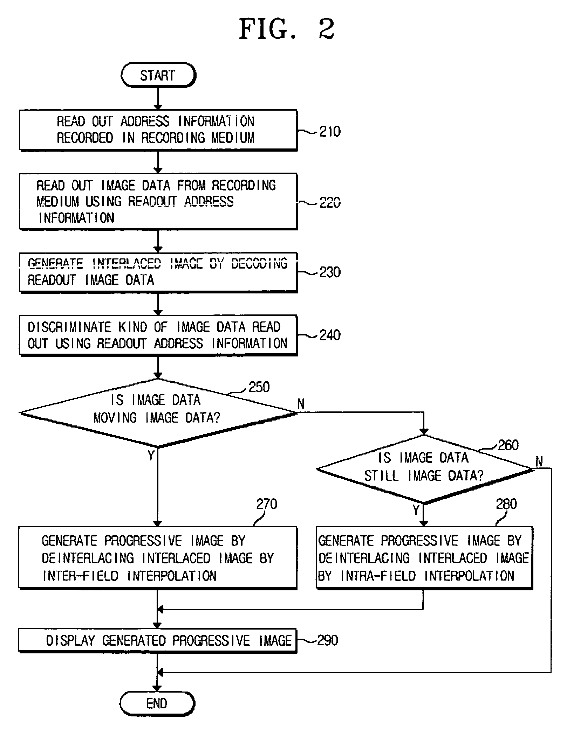

Hereinafter, the deinterlacing process performed by the video appliance illustrated in Figure 1 will be explained in detail with reference to Figure 2 that is a flowchart illustrating the method for performing the deinterlacing according to the deinterlacing type determined using the address information of the image data according to an embodiment of the present invention.

The readout unit 120 reads out the address information recorded in the recording medium 110 in operation 210. The address information is recorded in a specified area of the recording medium 110, and in the case of the DVD, it is recorded in a DSI (Data Search Information) area that exists in a navigation packet.

In operation 220, the readout unit 120 reads out the corresponding image data from the recording medium 110 using the address information read out in operation 210.

Then, in operation 230, the decoding unit 130 generates the interlaced image by decoding the image data read out in operation 220.

At the same time, in operation 240, the discrimination unit 140 discriminates the kind of the image data read out in step 220 using the address information read out in operation 210. That is, the discrimination unit 140 discriminates whether the image data read out in operation 220 is the moving image data or the still image data.

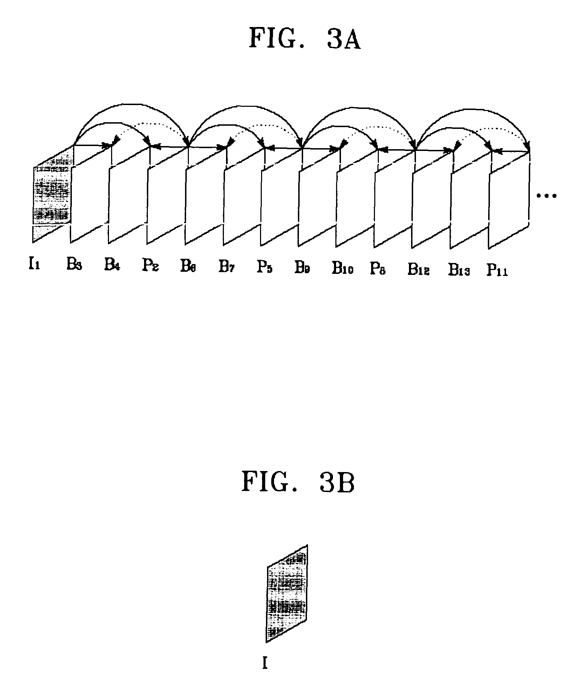

The moving image data is composed of many pictures. That is, as illustrated in Figure 3A, the moving image data is composed of a plurality of I (Intra) pictures, P (predictive) pictures and B (Bidirectionally predictive) pictures. The respective pictures are recorded in different positions on the recording medium 110. Accordingly, the address information for the pictures that constitute the moving image data are also different from one another. In reproducing the moving image data, these pictures are sequentially read out. Consequently, the address information of the moving image data is time-varying.

By contrast, the still image data is composed of one picture. That is, as illustrated in Figure 3B, the still image data is composed of one I picture. Accordingly, in reproducing the still image data, one I picture is continuously read out. Consequently, the address information of the still image data is not time-varying.

Accordingly, if the address information read out in operation 210 is time-varying, the discrimination unit 140 discriminates the image data read out in operation 220 as the moving image data. As described above, since the moving image data is composed of the plurality of sequentially readout pictures having different address information, the address information is time-varying.

By contrast, if the address information read out in operation 210 is not time-varying, the discrimination unit 140 discriminates the image data read out in operation 220 as the still image data. As described above, since the still image data is composed of one picture being continuously read out, the address information is not time-varying.

In operations 250, 260, 270 and 280, the deinterlacing unit 150 performs the deinterlacing in different ways according to the result of the discrimination (i.e., the type of the image data) in operation 240.

Specifically, if in operation 250, it is discriminated that the image data is the moving image data, then in operation 270, the deinterlacing unit 150 generates the progressive image by deinterlacing the interlaced image generated in operation 230 by an inter-field interpolation. In this case, a weave type interpolation may be applied as the inter-field interpolation.

Additionally, if in operation 260, it is discriminated that the image data is the still image data, the deinterlacing unit 150 generates the progressive image by deinterlacing the interlaced image generated in operation 230 by an intra-field interpolation in operation 280. In this case, a bob type interpolation may be applied as the intra-field interpolation.

In operation 290, the progressive image generated in operation 270 or 280 is outputted to the display unit 160 or the output terminal 170, and displayed on the display unit 160 or an external display device such as a TV receiver, a monitor, etc. that is connected to or the output terminal 170. If the display unit 160 is not provided in the video appliance (for example, if the video appliance is a DVD player), the progressive image should be displayed through an external display device.

As discussed above, the deinterlacing method that discriminates the type of the image data using the address information of the image data recorded in the recording medium and performs the deinterlacing in different ways according to the discriminated kind of the image data has been explained. The present invention can be applied to any video appliance that can reproduce the image data recorded in the recording medium, such as a CD player, a DVD player, a HDD player, a player having a mountable memory card, a digital camera, a digital camcorder, a mobile phone, a PDA (Personal Digital Assistant), a TV receiver or a set top box having a built-in or mountable recording medium, and a combination type video appliance in which the above-described devices are selectively combined.

As described above, according to the present invention, it becomes possible to discriminate the type of the image data recorded in the recording medium using the address information and to perform the deinterlacing in different ways according to the discriminated type of the image data. Since the above-described discrimination of the type of the image data does not require a large amount of storage space and computation, the deinterlacing can effectively be performed without a high-capacity memory and a high-speed processor.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A video appliance, comprising:
a readout unit (120) to read out address information recorded in a recording medium and to read out image data from the recording medium using the readout address information;
a decoding unit (130) to generate an interlaced image by decoding the image data read out from the readout unit (120);
a discrimination unit (140) to discriminate a kind of the image data readout from the readout unit (120) using the address information readout from the readout unit (120); and
a deinterlacing unit (150) to generate a progressive image by deinterlacing the interlaced image generated from the decoding unit (130) in different ways based on the kind of the image data discriminated by the discrimination unit (140).

2. The video appliance according to claim 1, wherein the discrimination unit (140) discriminates the image data as moving image data if the address information is time-varying, and discriminates the image data as still image data if the address information is not timevarying.

3. The video appliance according to claim 2, wherein the deinterlacing unit (150) generates the progressive image by deinterlacing the interlaced image by an inter-field interpolation if the discrimination unit (140) discriminates the image data as the moving image data, and generates the progressive image by deinterlacing the interlaced image by an intra-field interpolation if the discrimination unit (140) discriminates the image data as the still image data.

4. The video appliance according to claim 3, wherein the inter-field interpolation is a weave type interpolation, and the intra-field interpolation is a bob type interpolation.

5. The video appliance according to any preceding claim, wherein the recording medium is at least one of an optical recording medium, a memory card, a magnetic recording medium, a connection type recording medium, a DVD (Digital Video Disk), a CD (Compact Disk), a HDD (Hard Disk Drive) and/or a USB (Universal Serial Bus) memory.

6. The video appliance according to claim 5, wherein if the recording medium is the DVD, the readout unit (120) reads out the address information from DSI (Data Search Information) of the DVD.

7. A deinterlacing method, comprising:
reading out address information recorded in a recording medium;
reading out image data from the recording medium using the readout address information;
generating an interlaced image by decoding the read image data;
discriminating a type of the image data readout from the recording medium using the readout address information; and
generating a progressive image by deinterlacing the generated interlaced image in different ways based on the discriminated type of the image data.

8. The deinterlacing method according to claim 7, further comprising discriminating the image data as moving image data if the address information is time-varying, and discriminating the image data as still image data if the address information is not time-varying.

9. The deinterlacing method according to claim 8, further comprising generating the progressive image by deinterlacing the interlaced image by an inter-field interpolation if the image data is discriminated as the moving image data, and generating the progressive image by deinterlacing the interlaced image by an intra-field interpolation if the image data is discriminated as the still image data.

10. The deinterlacing method according to claim 9, wherein the inter-field interpolation is a weave type interpolation, and the intra-field interpolation is a bob type interpolation.

11. The deinterlacing method according to any of claims 7 to 10, wherein the recording medium is at least one of an optical recording medium, a memory card, a magnetic recording medium, a connection type recording medium, a DVD (Digital Video Disk), a CD (Compact Disk), a HDD (Hard Disk Drive) and/or a USB (Universal Serial Bus) memory.

12. The deinterlacing method according to claim 11, wherein if the recording medium is the DVD, reading out the address information from DSI (Data Search Information) of the DVD.

13. A deinterlacing method, comprising:
discriminating a type of an image data readout from a recording medium based on a corresponding address information of the image data; and
generating a progressive image by deinterlacing a generated interlaced image in different ways based on the type of the image data.

14. The deinterlacing method according to claim 13, further comprising discriminating the image data as moving image data if the address information is time-varying, and discriminating the image data as still image data if the address information is not time-varying.

15. A method, comprising:
reading image data; and
deinterlacing the image data responsive to a readout address of the image data.

16. The method according to claim 15, wherein the deinterlacing is responsive to whether the address changes over time.
